# FASCICULE DE BREVET EUROPEEN

(11) **EP 3 749 548 B1**
(45) Date de publication et mention de la délivrance du brevet: **27.04.2022**
(21) Numéro de dépôt: 18706441.5
(22) Date de dépôt: 09.02.2018
(51) Int. Cl.: B60P 1/36

(54) **VEHICULE DE TRANSPORT DE MATERIAUX**
MATERIALTRANSPORTFAHRZEUG
MATERIALS TRANSPORT VEHICLE

(43) Date de publication de la demande: 16.12.2020
(73) Titulaire: Delto-Pull Sprl, 7170 Manage (BE)
(72) Inventeur: DELTOMME, Marc, 1600 Sint Pieters Leeuw (BE)
(74) Mandataire: ABYOO
(86) Numéro de dépôt international: PCT/EP2018/053345
(87) Numéro de publication internationale: WO 2019/154514

(56) Documents cités:
- EP-A1- 2 634 042
- CH-A- 446 182
- DE-A1- 3 920 286
- US-A- 4 078 682

## Description

### Domaine de l'invention

L'invention se rapporte au domaine des véhicules comportant un récipient pour le chargement, le transport et le déchargement de matériaux. Plus particulièrement, l'invention se rapporte à un tel véhicule comportant de moyens pour décharger lesdits matériaux sans devoir déplacer le récipient.

### État de la technique

On connait par exemple des véhicules à bennes basculantes pour le transport de matériaux. Pour des raisons économiques, on a tendance à préférer des bennes de plus en plus volumineuses. Celles-ci sont toutefois inadaptées lorsque les lieux de déchargement sont exigus et ne permettent pas le bennage (basculement de la benne), tel que par exemple dans un tunnel ou dans un bâtiment. Par ailleurs, le bennage présente de nombreux problèmes de sécurité, dont notamment le risque de basculement du véhicule, par exemple lorsqu'il est sur un terrain non-horizontal et/ou par grands vents.

Pour pallier à ces inconvénients, il a été conçu des véhicules dont le récipient destiné à contenir les matériaux comporte une cloison mobile pouvant être déplacée en force d'avant en arrière à l'intérieur du récipient afin de décharger les matériaux par une porte arrière du récipient sans devoir basculer le récipient.

Afin de déplacer la cloison en force, le brevet US4,260,317 propose d'utiliser un vérin monté entre une paroi avant du récipient et la cloison mobile. Le cylindre d'un tel vérin occupe un espace longitudinal non négligeable, ce qui réduit d'autant le volume utile de chargement. De plus, lorsque le récipient dépasse une certaine longueur, il faut faire appel à un vérin télescopique, pesant lourd et coutant cher.

Pour pallier à cet inconvénient, il a été fait appel à des moyens de traction par câbles ou chaînes et à un moteur. On connait un tel véhicule du brevet US5,314,290. Le récipient de ce véhicule comporte une cloison transversale mobile qui est tirée vers l'arrière au moyen de câbles de traction reliés à un moteur. Lors de la traction, la cloison mobile subira toutefois des contraintes de torsion importantes, et, pour peu que le matériau à décharger soit collant, tel que de la terre mouillée par exemple, la cloison pourra basculer sous l'effet de la réaction du matériau. Les câbles de traction pourront par ailleurs être soumis à des chocs suite à la chute de matériaux dans le récipient lors de son chargement et ils pourront se détériorer ou s'user prématurément suite à cela.

Les brevets DE 39 20 286 et CH 446 182 décrivent un camion à ordures comportant un récipient basculant. Le récipient comporte une cloison mobile qui est tirée vers l'arrière au moyen d'une paire de chaines sans fin. Ces chaines sont logées dans des gorges ménagées à l'intérieur des parois latérales du récipient. Ceci nécessite d'avoir des parois latérales creuses et ne convient donc pas aux récipients dont les parois latérales sont pleines, ce qui est généralement le cas dans les véhicules concernés. Par ailleurs, le matériau chargé dans le récipient viendra inévitablement se loger dans les gorges, ce qui provoquera une usure prématurée des chaines, voire pourront les détruire s'il s'agit de matériau granuleux et dur, tel que du gravier par exemple. Enfin, les gorges constituent un chemin par lequel le matériau peut passer de l'autre côté de la cloison mobile lors de son déchargement, c'est-à-dire vers l'avant du récipient, ce qui n'est évidemment pas souhaitable.

### Résumé de l'invention

Un des buts de l'invention est de fournir un véhicule muni d'un récipient comportant une cloison mobile tirée vers l'arrière par une ou des liaisons mécaniques souples, tels que par exemple un ou des câbles, et qui résout au moins partiellement les problèmes des véhicules connus de ce type.

Un des buts particuliers de l'invention est de fournir un tel véhicule qui nécessite moins d'entretien et qui est plus durable que les véhicules connus.

L'invention est définie par la revendication indépendante. Les revendications dépendantes définissent des modes de réalisation préférés de l'invention.

Selon l'invention il est fourni un véhicule comportant un récipient pour le chargement, le transport et le déchargement de matériaux, ledit récipient s'étendant longitudinalement selon un axe avant-arrière du véhicule et comportant :
- une paroi latérale gauche et une paroi latérale droite,
- une paroi arrière ouvrante pour le déchargement desdits matériaux
- une cloison mobile s'étendant transversalement à l'intérieur du récipient,
- une première liaison mécanique souple dont une extrémité avant est reliée à une extrémité gauche de la cloison et qui s'étend d'abord horizontalement vers l'arrière du véhicule le long d'une face intérieure de la paroi latérale gauche, puis vers le bas ou vers le haut via au moins une première poulie,
- une deuxième liaison mécanique souple dont une extrémité avant est reliée à une extrémité droite de la cloison et qui s'étend d'abord horizontalement vers l'arrière du véhicule le long d'une face intérieure de la paroi latérale droite, puis vers le bas ou vers le haut via au moins une deuxième poulie.

Le véhicule comporte en outre un ensemble moteur dont le stator est fixé au châssis du véhicule et dont le rotor est relié à une extrémité arrière de la première et de la deuxième liaison mécanique pour les tirer et pour entrainer ainsi la cloison mobile en force vers l'arrière du récipient.

L'extrémité avant de la première liaison mécanique est reliée à l'extrémité gauche de la cloison, à une hauteur H1 comprise entre 10% et 90% d'une hauteur H2 de la cloison, et l'extrémité avant de la deuxième liaison mécanique est reliée à l'extrémité droite de la cloison à la hauteur H1.

La paroi latérale gauche comporte par ailleurs une première partie longitudinale surplombant la première liaison mécanique, et la paroi latérale droite comporte une deuxième partie longitudinale surplombant la deuxième liaison mécanique. La première liaison mécanique souple et la deuxième liaison mécanique souple sont reliées entre elles pour former une liaison mécanique souple unique reliée de manière libre à la cloison mobile.

Le récipient du véhicule est un récipient conçu pour le chargement, le transport et le déchargement de matériaux solides ou liquides. Le récipient peut être une benne, un container, une citerne, etc... Dans le cas d'un récipient conçu pour le chargement, le transport et le déchargement de matériaux solides, ledit récipient est de préférence un caisson ouvert sur au moins une partie supérieure.

Grâce à la position de la liaison entre les deux liaisons mécaniques et la cloison, la cloison mobile subira moins de contraintes que si ces liaisons étaient fixées au bas de la cloison. La cloison sera également moins susceptible de basculer sous l'effet de la réaction du matériau lors de son déchargement.

De préférence, la hauteur H1 est comprise entre 30% et 70% de la hauteur H2. Par ailleurs, le fait que les liaisons mécaniques soient surplombées par des parties des parois latérales du récipient, réduit le risque que ces liaisons soient endommagées par la chute de matériaux lors du chargement du récipient par le haut.

Enfin, les parois latérales du récipient d'un tel véhicule ne doivent pas être creuses et peuvent donc être constituées uniquement de matériaux pleins tel que par exemple des tôles pleines.

De préférence, les parois latérales sont constituées de tôles pliées longitudinalement, la tôle de la paroi latérale gauche comporte un premier repli formant la première partie longitudinale surplombant la première liaison mécanique, et la tôle de la paroi latérale droite comporte un deuxième repli formant la deuxième partie longitudinale surplombant la deuxième liaison mécanique. Ceci permet de réaliser le récipient sans devoir modifier fondamentalement les processus connus de fabrication de récipients en tôle pliée.

Alternativement, le récipient comporte de préférence une première pièce rapportée à la paroi latérale gauche et formant la première partie longitudinale surplombant la première liaison mécanique, et une deuxième pièce rapportée à la paroi latérale droite et formant la deuxième partie longitudinale surplombant la deuxième liaison mécanique. Cette alternative permet de transformer aisément un récipient réalisé selon les processus connus de fabrication de récipients.

Suivant une forme de réalisation préférée, le plancher et les parois latérales du récipient sont formés d'une tôle pliée d'un seul tenant. On peut alternativement utiliser plusieurs tôles pliées et aboutées.

De préférence, les deux liaisons mécaniques souples sont des câbles, ce qui réduit le frottement entre lesdites liaisons et le matériau avec lequel ils sont en contact et ce qui assure également une plus grande longévité.

De préférence, la face intérieure de la paroi latérale gauche présente un dégagement d'au moins 2 cm en dessous de la première liaison mécanique, et la face intérieure de la paroi latérale droite présente un dégagement d'au moins 2 cm en dessous de la deuxième liaison mécanique. Ceci permet d'éviter que du matériau vienne se coincer entre l'une et/ou l'autre des liaisons mécaniques et le récipient.

Selon l'invention, la première liaison mécanique souple et la deuxième liaison mécanique souple sont reliées entre elles pour former une liaison mécanique souple unique et ladite liaison mécanique souple unique est reliée de manière libre à la cloison mobile. Ceci présente l'avantage qu'en cas de rupture de la liaison mécanique souple unique, aucune traction ne sera plus opérée sur la cloison par l'ensemble moteur dans le cas où le rotor de l'ensemble moteur continue à tourner après la rupture.

De manière préférée, ladite liaison mécanique souple unique est reliée de manière libre à la cloison au moyen d'une quatrième poulie et d'une cinquième poulie montées respectivement à l'extrémité gauche et à l'extrémité droite de la cloison mobile. De manière encore plus préférée, la quatrième poulie et la cinquième poulie sont montées à l'avant de la cloison mobile, ce qui protège et permet de réduire le risque l'encrassement desdites poulies.

### Brève description des figures

Ces aspects ainsi que d'autres aspects de l'invention seront clarifiés dans la description détaillée de modes de réalisation particuliers de l'invention, référence étant faite aux dessins, dans lesquels :
- La Fig. 1: est une vue en perspective d'un véhicule selon l'invention;
- La Fig. 2: est une vue schématique en coupe du récipient du véhicule de la Fig. 1;
- La Fig. 3a: est une vue en coupe suivant le plan IV-IV du récipient de la Fig. 2 ;
- La Fig. 3b: est une vue partielle de l'arrière du récipient de la Fig. 2, selon un mode de réalisation;
- La Fig. 3c: est une vue partielle de l'arrière du récipient de la Fig. 2, selon un autre mode de réalisation;
- La Fig. 4: est une vue en coupe suivant le plan IV-IV d'un autre mode de réalisation du récipient de la Fig. 2 ;
- La Fig. 5: montre une phase de déchargement du récipient de la Fig.2 ;
- La Fig. 6: est une vue schématique en coupe d'une version préférée du récipient du véhicule de la Fig. 1 ;
- La Fig. 7: est une vue schématique en coupe d'une version alternative et préférée du récipient du véhicule de la Fig. 1 ;
- La Fig. 8: est une vue de profil d'un mode de réalisation préféré du récipient de la Fig. 1 ;
- La Fig. 9: est une vue en coupe suivant le plan V-V d du récipient de la Fig. 8.
- La Fig. 10: est une vue en coupe suivant le plan VI-VI d'une partie du récipient de la Fig. 2, selon un mode de réalisation préféré ;
- La Fig. 11: est une vue en coupe suivant le plan VI-VI d'une partie du récipient de la Fig. 2, selon un autre mode de réalisation préféré;
- La Fig. 12: est une vue en coupe suivant le plan VI-VI d'une partie du récipient de la Fig. 2, selon un mode de réalisation plus préféré.

Les dessins des figures ne sont ni à l'échelle, ni proportionnés. Généralement, des éléments semblables ou identiques sont dénotés par des références identiques dans les figures.

### Description détaillée de modes de réalisation de l'invention

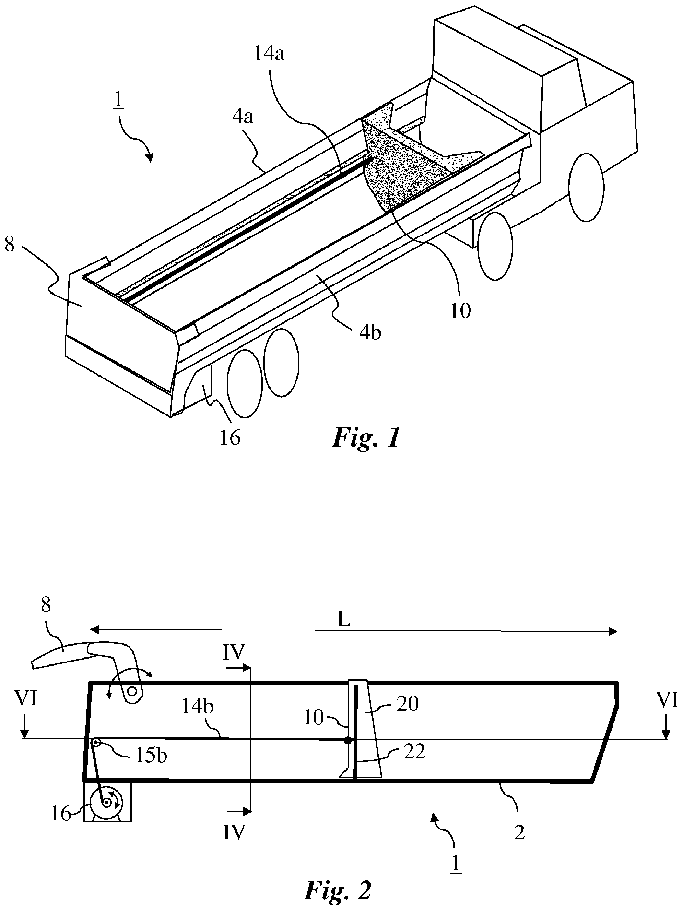

La Fig. 1 montre une vue en perspective d'un exemple de véhicule selon l'invention. Le véhicule peut être un camion, une semi-remorque, un wagon, un camion-citerne etc.

Le véhicule comporte un récipient (1) pour le chargement, le transport et le déchargement de matériaux solides ou liquides, de préférence pour des matériaux solides. Le récipient peut être une benne, un container, une citerne, etc..... Dans le cas d'un récipient conçu pour le chargement, le transport et le déchargement de matériaux solides, ledit récipient est de préférence un caisson ouvert sur au moins une partie supérieure.

Le récipient (1) s'étend longitudinalement selon un axe avant-arrière du véhicule et possède une longueur L comprise de préférence entre 4000 mm et 15000 mm, et une largeur W comprise de préférence entre 2000 mm et 3000 mm. Le récipient (1) comporte une paroi latérale gauche (4a), une paroi latérale droite (4b), une paroi arrière (8) ouvrante (par exemple une porte basculante) pour le déchargement des matériaux. De préférence les parois latérales gauche et droite (4a, 4b) sont en tôle. De préférence les parois latérales gauche et droite (4a, 4b) sont pleines, c'est-à-dire non creuses.

Le récipient (1) comporte également une cloison mobile (10) s'étendant transversalement à l'intérieur du récipient (1). Cette cloison peut par exemple être une simple plaque métallique, plane ou courbée et optionnellement munie de contreforts (20).

Le récipient (1) est de préférence ouvert ou ouvrable par le haut afin de pouvoir y charger les matériaux par le haut. Le récipient (1) peut par exemple être complètement ouvert par le haut ou comporter une porte ou une bâche ou tout autre moyen équivalent et permettant d'accéder à son volume intérieur par le haut.

Bien que la Fig.1 montre un récipient présentant une paroi avant (opposée à la face arrière (8)), cette paroi avant n'est pas indispensable étant donné que la cloison mobile (10) peut faire office de paroi avant. De préférence le récipient ne comporte pas de paroi avant et il comporte dans ce cas optionnellement des traverses reliant les extrémités avant des parois latérales gauche (4a) et droite (4b) et servant de renforts.

La Fig. 2 est une vue schématique en coupe du récipient du véhicule de la Fig.1 dans lequel la paroi arrière (la porte) est ouverte. Pour des raisons de clarté, le véhicule n'est plus représenté dans cette figure ainsi que les suivantes, mais il est évidemment bien présent.

On y voit que le récipient (1) comporte également :
- une première liaison mécanique (14a) souple dont une extrémité avant est attachée à une extrémité gauche de la cloison et qui s'étend d'abord horizontalement vers l'arrière du véhicule le long d'une face intérieure de la paroi latérale gauche (4a), puis vers le bas via au moins une première poulie (15a), et
- une deuxième liaison mécanique (14b) souple dont une extrémité avant est attachée à une extrémité droite de la cloison et qui s'étend d'abord horizontalement vers l'arrière du véhicule le long d'une face intérieure de la paroi latérale droite (4b), puis vers le bas via au moins une deuxième poulie (15b).

Le véhicule comporte en outre un moteur ou ensemble moteur (16) dont le stator est fixé au véhicule et dont le rotor est relié à une extrémité arrière de la première liaison mécanique (14a) et de la deuxième liaison mécanique (14b) pour les tirer et pour entrainer ainsi la cloison mobile (10) en force vers l'arrière (8) du récipient (1).

L'ensemble moteur (16) peut par exemple comporter un moteur électrique ou un moteur hydraulique sur l'arbre moteur duquel s'enroulent les liaisons mécaniques (14a, 14b). Notons que dans le cas d'un moteur hydraulique, et par analogie avec un moteur électrique, le terme « stator » désigne la partie fixe du moteur alors que le terme « rotor » désigne la partie mobile (rotative) du moteur et comprenant un arbre moteur.

Un réducteur sera de préférence prévu afin de réduire la vitesse de rotation et d'augmenter le couple à la sortie de l'ensemble moteur, c'est-à-dire là où les liaisons mécaniques sont en prise avec l'axe moteur de l'ensemble moteur. On peut prévoir un moteur indépendant pour chaque liaison mécanique ou bien un seul moteur pour entraîner en même temps les deux liaisons mécaniques. De préférence, on utilisera un seul moteur pour entraîner les deux liaisons mécaniques car cela facilite la synchronisation des mouvements des deux liaisons.

De préférence, l'ensemble moteur comportera également un limiteur de couple afin d'éviter une rupture des liaisons mécaniques dans le cas où la force résistante s'approcherait trop de la force de rupture des liaisons mécaniques. Bien entendu, il sera aussi prévu des moyens de commande de l'ensemble moteur afin qu'un opérateur puisse démarrer et arrêter le mouvement de la cloison mobile. Un variateur de vitesse moteur pourra également être prévu. Ces moyens étant connus, ils ne seront pas plus détaillés ici.

De préférence, l'ensemble moteur (16) est situé en dehors du récipient (1), de manière plus préférée sous le récipient (1), de manière encore plus préférée sous le récipient (1) et à une extrémité arrière du récipient (1), comme montré à la Fig.2.

Notons que d'autres configurations sont possibles et qu'on peut par exemple prévoir alternativement que :
- la première poulie (15a) renvoie la première liaison mécanique vers le haut et ensuite une troisième poulie renvoie la première liaison mécanique vers l'avant du récipient, et que
- la deuxième poulie (15b) renvoie la deuxième liaison mécanique vers le haut et ensuite une quatrième poulie renvoie la deuxième liaison mécanique vers l'avant du récipient, et que
- l'ensemble moteur est par exemple monté à l'avant du véhicule.

Dans cette alternative, on peut prévoir encore d'autre poulies après la troisième et la quatrième poulie et qui renvoient la première et la deuxième liaison mécanique vers encore d'autres endroits où se trouverait l'ensemble moteur. Selon une version préférée, les axes de la première poulie (15a) et de la deuxième poulie (15b) sont inclinés par rapport à l'horizontale.

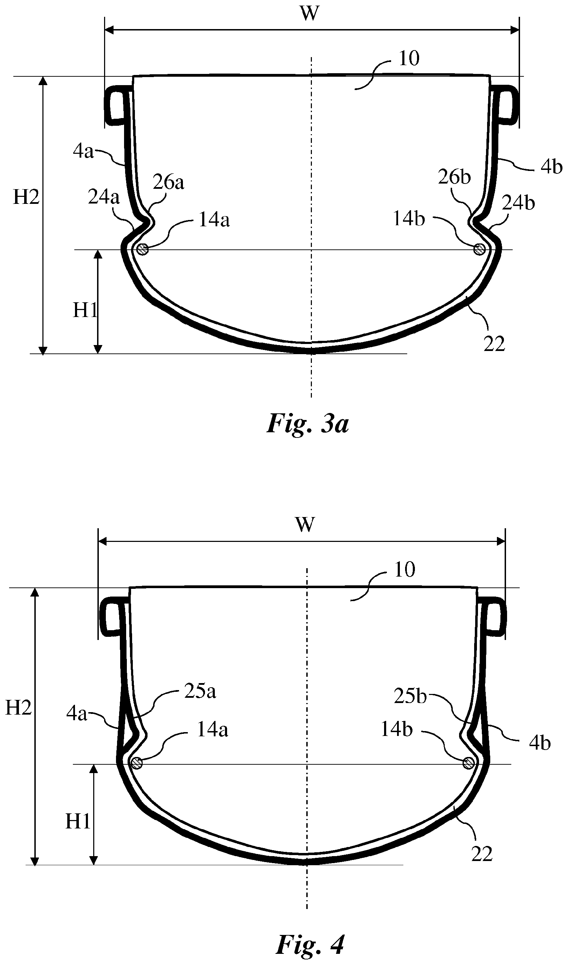

La Fig. 3a est une vue en coupe suivant le plan IV-IV du récipient de la Fig. 2. On y voit que l'extrémité avant de la première liaison mécanique (14a) est fixée à l'extrémité gauche de la cloison (10), à une hauteur H1 comprise entre 10% et 90% d'une hauteur H2 de la cloison, et que l'extrémité avant de la deuxième liaison mécanique (14b) est fixée à l'extrémité droite de la cloison (10) à la hauteur H1, ce qui réduite les contraintes de torsion sur la cloison (10) lorsque celle-ci est mise en mouvement. De préférence, la hauteur H1 est comprise entre 20% et 80% de la hauteur H2. De manière plus préférée, la hauteur H1 est comprise entre 30% et 70% de la hauteur H2. De manière encore plus préférée, la hauteur H1 est comprise entre 40% et 60% de la hauteur H2.

Les liaisons mécaniques (14a, 14b) sont de préférence fixées du côté de la face « active » de la cloison mobile (10) (celle dirigée vers la cloison arrière, c'est-à-dire celle qui est en contact avec le matériau transporté), par exemple au moyen d'une cosse ou d'un anneau passant dans un étrier solidaire de la cloison. Alternativement, des orifices traversent la cloison de part en part et les liaisons mécaniques sont insérés dans ces orifices et fixées du côté de la face « passive » de la cloison.

Ces deux modes de fixation permettent d'éviter que les liaisons mécaniques ne passent entre la cloison mobile et les parois latérales (4a, 4b) du récipient.

On y voit également que la paroi latérale gauche (4a) du récipient (1) comporte une première partie longitudinale (24a) surplombant la première liaison mécanique (14a), et que la paroi latérale droite (4b) du récipient (1) comporte une deuxième partie longitudinale (24b) surplombant la deuxième liaison mécanique (14b). Ceci a pour effet de protéger les liaisons mécaniques de la chute de matériaux lors du chargement de ces matériaux par le haut dans le récipient (1).

La première partie longitudinale (24a) peut par exemple être formée par un premier repli dans la tôle de la paroi latérale gauche (4a), comme illustré à la Fig.3a. Il en va de même pour la deuxième partie longitudinale (24b). La cloison comprend de part et d'autre des congés (26a, 26b) de forme correspondante, de façon à pouvoir coulisser sans problème d'avant en arrière dans le récipient. Il va de soi que bien d'autres formes peuvent être données aux parois latérales (4a, 4b) et permettant d'avoir chacune une partie surplombant les liaisons mécaniques sur tout ou partie de leur longueur horizontale.

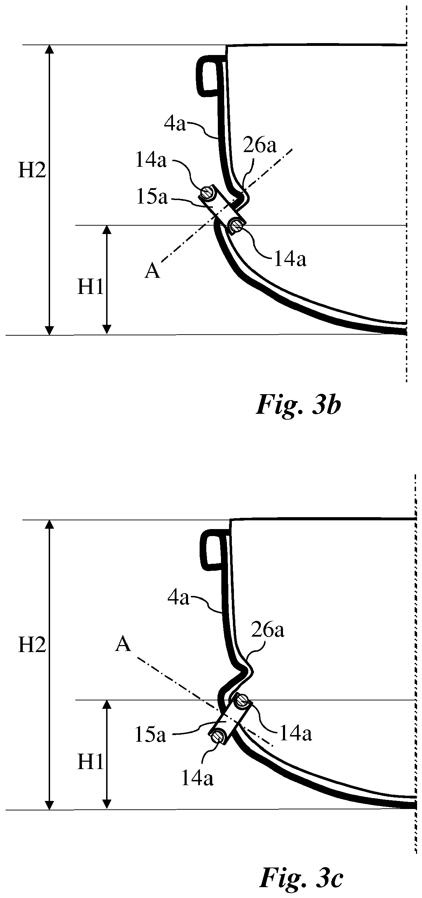

La Fig. 3b est une vue partielle de l'arrière du récipient de la Fig. 2, selon un mode de réalisation. On y voit la première poulie (15a) dont l'axe A est de préférence incliné par rapport à l'horizontale. La première liaison mécanique, en venant de la paroi mobile, arrive horizontalement à la première poulie par le bas de ladite poulie, en fait un tour partiel, puis en repart, par exemple vers le bas. L'avantage de l'inclinaison de l'axe A est que la première liaison mécanique peut être décalée latéralement et ainsi moins gêner le déchargement de marchandises. Il en va de préférence de même pour la deuxième poulie (15b), non représentée sur la Fig.3b mais arrangée symétriquement par rapport au plan central représenté par la ligne en tiret-point sur la figure.

La Fig. 3c est une vue partielle de l'arrière du récipient de la Fig. 2, selon un autre mode de réalisation. On y voit la première poulie (15a) dont l'axe A est de préférence incliné par rapport à l'horizontale. La première liaison mécanique, en venant de la paroi mobile, arrive horizontalement à la première poulie par le haut de ladite poulie, en fait un tour partiel, puis en repart, par exemple vers le haut. L'avantage est le même qu'avec la Fig. 3b.

Comme illustré à la Fig.4, le récipient (1) comporte alternativement une première pièce rapportée (25a) à la paroi latérale gauche (4a) et formant la première partie longitudinale (24a) surplombant la première liaison mécanique (14a), et une deuxième pièce rapportée (25b) à la paroi latérale droite (4b) et formant la deuxième partie longitudinale (24b) surplombant la deuxième liaison mécanique (14b). Les pièces rapportées peuvent par exemple être des tôles fixées, par exemple soudées ou boulonnées ou rivetées, aux faces latérales du récipient (1).

De préférence, la face intérieure de la paroi latérale gauche (4a) présente un dégagement d'au moins 2 cm en dessous de la première liaison mécanique (14a), et la face intérieure de la paroi latérale droite (4b) présente un dégagement d'au moins 2 cm en dessous de la deuxième liaison mécanique (14b), ce qui permet d'éviter que le matériau (18) vienne se coincer entre les liaisons mécaniques et le récipient (1). Comme on le voit sur les Figs. 3 et 4, le récipient (1) ne présente pas de saillie dans sa face intérieure et sur toute la hauteur H1, ce qui constitue une forme préférée du récipient (1).

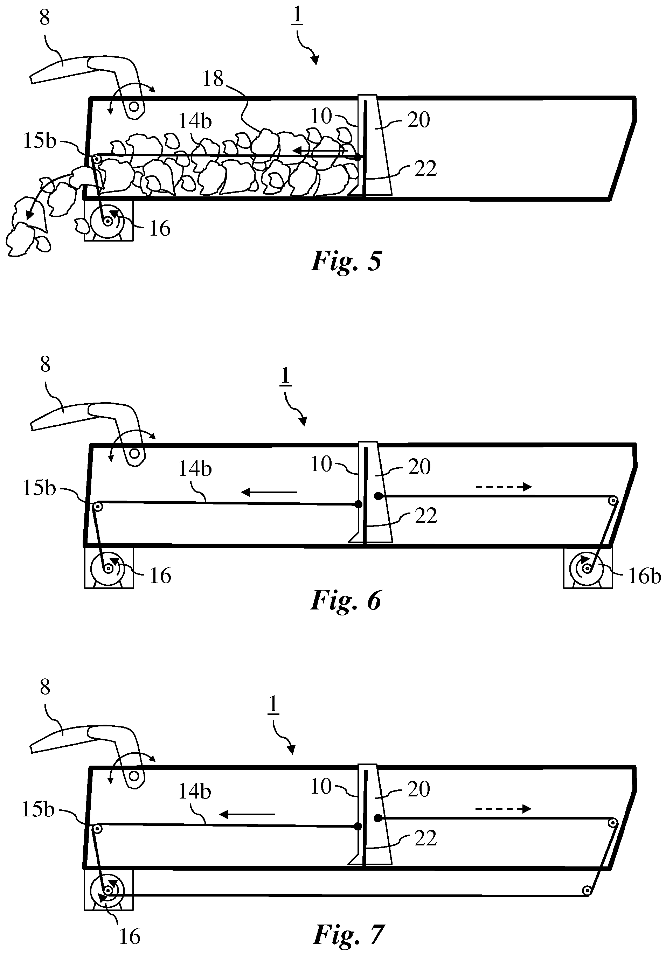

La Fig. 5 montre une phase de déchargement des matériaux (18) hors du récipient (1) de la Fig.2. Pour des raisons de clarté, le véhicule n'est plus représenté sur la figure mais il est évidemment bien présent. Lorsque l'ensemble moteur (16) est mis en route par un opérateur, le rotor du moteur enroulera les moyens de liaison mécaniques (14a, 14b), ce qui aura pour effet de tirer la cloison mobile (10) vers l'arrière du récipient (1) (vers la porte 8) et provoquera la chute des matériaux (18) hors du récipient (1). En contrôlant la durée et/ou la puissance d'actionnement de l'ensemble moteur (16), l'opérateur peut nettement mieux contrôler la quantité de matériaux déchargés que dans le cas d'un bennage, ce qui peut par exemple être utile dans le cas d'une livraison fractionnée.

Des moyens de rappel (non représentés) peuvent être prévus pour ramener ensuite la cloison mobile (10) vers l'avant du récipient (1) pour un prochain chargement de matériaux. Ces moyens de rappel peuvent être identiques, équivalents ou différents de ceux décrits ci-dessus. Comme illustré à la Fig.6, on peut par exemple prévoir une deuxième paire de liaisons mécaniques souples dont une extrémité est reliée à la cloison et dont l'autre extrémité est reliée à un deuxième ensemble moteur (16b) agissant en alternance et en sens contraire de l'ensemble moteur (16) décrit ci-dessus. Ce deuxième ensemble moteur (16b) peut être nettement moins puissant que l'ensemble moteur (16) décrit ci-dessus étant donné que le récipient (1) est vide de matériaux lorsque ce deuxième ensemble moteur (16b) est actionné. Alternativement, on peut prévoir d'utiliser l'ensemble moteur (16) décrit ci-dessus pour les mouvements d'aller et de retour de la cloison mobile (10), comme illustré à la Fig. 7. Dans ce dernier cas, des poulies supplémentaires doivent être prévues pour ramener la deuxième paire de liaisons mécaniques vers l'ensemble moteur (16).

De préférence, le récipient (1) est un récipient autoportant dont les parois latérales gauche et droite (4a, 4b) comportent un assemblage de tôles présentant des pliures longitudinales. De manière préférée, les dites tôles ont une épaisseur comprise entre 4 mm et 20 mm.

De préférence, la première liaison mécanique souple (14a) est un câble et la deuxième liaison mécanique souple (14b) est un câble. De préférence, les câbles sont des câbles tressés. De préférence, il s'agit de câbles en acier.

De préférence, ni la première liaison mécanique (14a) ni la deuxième liaison mécanique (14b) ne passent entre la cloison mobile et respectivement la paroi latérale gauche (4a) et la paroi latérale droite (4b). Ceci évite de créer un passage pour les matériaux entre la cloison mobile (10) et le récipient (1), particulièrement en cours de déchargement lorsque les matériaux sont mis sous pression par le mouvement de la cloison mobile.

De préférence, au moins une partie de la périphérie de la cloison (10) comporte un joint d'étanchéité (22) s'étendant vers les faces intérieures du récipient (1), ce qui contribue également à bloquer ou limiter un passage pour les matériaux entre la cloison mobile (10) et le récipient (1).

De préférence, le récipient (1) comporte des moyens de guidage de la cloison mobile (10). Grâce à ces moyens de guidage, la cloison mobile sera mieux guidée lors de son déplacement d'avant en arrière dans le récipient (1) et vice-versa.

De manière préférée, les moyens de guidage sont disposés au niveau d'une partie supérieure du récipient (1) et à l'extérieur du récipient (1). Ainsi, les moyens de guidage ne seront pas en contact avec les matériaux (18) transportés dans le récipient (1), ce qui réduira leur encrassement et/ou leur blocage par lesdits matériaux.

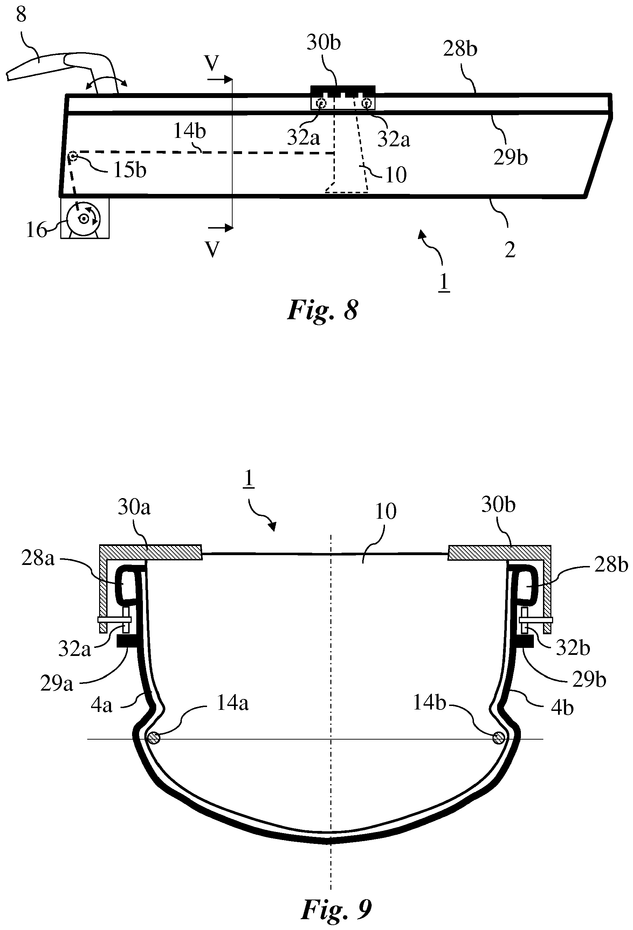

Un exemple de tels moyens de guidage est illustré à la Fig.8 qui montre une vue de profil d'un mode de réalisation préféré du récipient de la Fig. 1.

Dans cet exemple, la cloison mobile (10) est munie à chaque extrémité gauche et droite et dans sa partie supérieure d'étriers (30a, 30b) auxquels sont reliés respectivement une première paire de roulements (32a) et une deuxième paire de roulements (32b) d'axes horizontaux, les roulements de chaque paire de roulements étant disposés longitudinalement.

Dans cet exemple, les moyens de guidage comportent par ailleurs deux paires des rails longitudinaux : une première paire de rails (28a, 29a) étant disposée sur la face extérieure de la paroi latérale gauche (4a) du récipient (1), et une deuxième paire de rails (28b, 29b) étant disposée sur la face extérieure de la paroi latérale droite (4b) du récipient (1).

Comme on le voit sur la Fig. 9, qui est une vue en coupe suivant le plan V-V du récipient de la Fig. 8, la première paire de roulements (32a) est insérée entre et coopère avec les deux rails de la première paire de rails (28a, 29a) et la deuxième paire de roulements (32b) est insérée entre et coopère avec les deux rails de la deuxième paire de rails (28b, 29b), ce qui assure un guidage de la cloison mobile (1).

Les rails longitudinaux (28a, 28b, 29a, 29b) peuvent par exemple être formés par un pliage des parois latérales (4a, 4b) et/ou comprendre par exemple des pièces rapportées aux parois latérales telles que par exemple des profils fixés aux faces extérieures des parois latérales (4a, 4b).

Bien entendu, on peut prévoir plus que deux roulements par côté (gauche/droite) et/ou plus que deux rails par côté (gauche/droite). A la place de roulements, on peut prévoir des galets ou tout autre moyen équivalent.

De préférence, le récipient (1) est relié de manière fixe au véhicule. Selon l'invention, la première liaison mécanique souple et la deuxième liaison mécanique souple sont reliées entre elles pour former une liaison mécanique souple unique et ladite liaison mécanique souple unique est reliée de manière libre à la cloison. De préférence, la liaison mécanique souple unique est un câble ou une chaine.

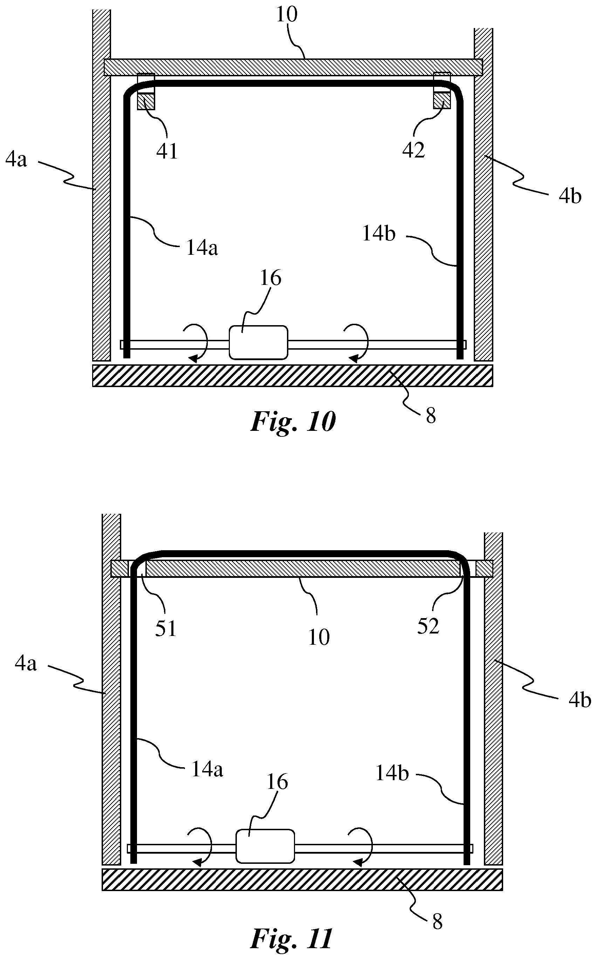

Par « reliée de manière libre », il faut comprendre que la liaison mécanique souple unique n'est pas reliée de manière fixe à la cloison mais que la liaison mécanique souple unique peut se déplacer librement par rapport à la cloison. Il y a plusieurs manières de réaliser une telle liaison libre. Les Figures 10, 11 et 12 en illustrent quelques exemples.

La Fig. 10 est une vue en coupe suivant le plan VI-VI d'une partie du récipient de la Fig. 2, illustrant un premier exemple de réalisation. Dans cet exemple, la première liaison mécanique souple (14a) et la deuxième liaison mécanique souple (14b) sont reliées entre elles pour former une liaison mécanique souple unique. Comme on le voit sur la Fig. 10, la cloison mobile (10) est munie - à ses extrémités gauche et droite et à la hauteur H1 - de deux pièces rapportées (41, 42) qui présentent chacune un trou transversal au travers desquels passe librement la liaison mécanique souple unique. Ainsi, lorsque la liaison mécanique souple unique se rompt, par exemple à cause d'une tension trop importante, elle n'exercera plus de traction sur la cloison mobile (à l'exception de celle éventuellement due aux forces de frottement), même si le rotor du l'ensemble moteur (16) continue à tourner après la rupture.

La Fig. 11 est une vue en coupe suivant le plan VI-VI d'une partie du récipient de la Fig. 2, illustrant un deuxième exemple de réalisation. Dans cet exemple, la première liaison mécanique souple (14a) et la deuxième liaison mécanique souple (14b) sont également reliées entre elles pour former une liaison mécanique souple unique. Comme on le voit sur la Fig. 11, la cloison mobile (10) est munie - à ses extrémités gauche et droite et à la hauteur H1 - de deux trous (51, 52) au travers desquels passe librement la liaison mécanique souple unique. Ce mode de réalisation présente l'avantage que la liaison mécanique souple unique passe derrière la cloison, ce qui la protège mieux que dans l'exemple de la Fig. 10.

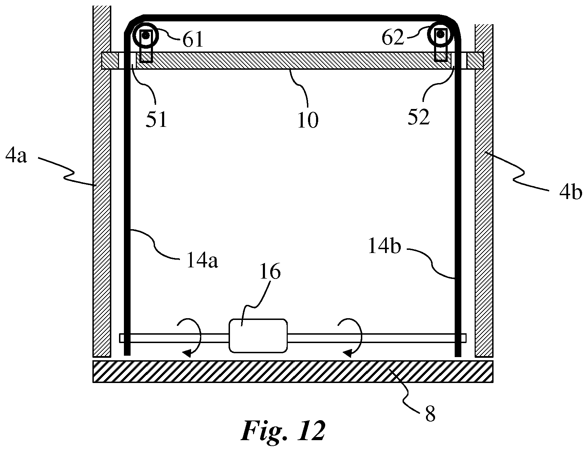

La Fig. 12 est une vue en coupe suivant le plan VI-VI d'une partie du récipient de la Fig. 2, illustrant un troisième exemple de réalisation. Dans cet exemple, la première liaison mécanique souple (14a) et la deuxième liaison mécanique souple (14b) sont également reliées entre elles pour former une liaison mécanique souple unique. Comme on le voit sur la Fig. 12, la cloison mobile (10) est munie - à ses extrémités gauche et droite et à la hauteur H1 - de deux trous (51, 52) au travers desquels passe librement la liaison mécanique souple unique. La cloison mobile (10) est par ailleurs munie - au niveau de ses extrémités gauche et droite et à la hauteur H1 - d'une quatrième poulie (61) d'axe vertical et d'une cinquième poulie d'axe vertical (62) autour desquelles s'enroule librement la liaison mécanique souple unique et qui ont donc chacune une fonction de renvoi d'angle.

Ce mode de réalisation préféré présente les mêmes avantages que ceux illustrés aux Figs. 10 et 11, et il présente l'avantage supplémentaire de réduire les forces de frottement entre la liaison mécanique souple unique et la cloison, ce qui réduit la traction sur la cloison et/ou les différences de traction gauche/droite lorsque la liaison mécanique souple unique se rompt. Par ailleurs, les poulies (61, 62) se trouvant derrière la cloison (c'est-à-dire à l'avant de la cloison selon l'axe avant - arrière du véhicule), elles sont protégées des matériaux chargés dans le récipient (1) du véhicule.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus. La présence de numéros de référence aux dessins ne peut être considérée comme limitative, y compris lorsque ces numéros sont indiqués dans les revendications.

L'usage des verbes « comprendre », « inclure », « comporter », ou toute autre variante, ainsi que leurs conjugaisons, ne peut en aucune façon exclure la présence d'éléments autres que ceux mentionnés.

L'usage de l'article indéfini « un », « une », ou de l'article défini « le », « la » ou « l' », pour introduire un élément n'exclut pas la présence d'une pluralité de ces éléments.

## Revendications

1. Véhicule comportant un récipient (1) pour le chargement, le transport et le déchargement de matériaux, ledit récipient (1) s'étendant longitudinalement selon un axe avant-arrière du véhicule et comportant :
- une paroi latérale gauche (4a) et une paroi latérale droite (4b),
- une paroi arrière (8) ouvrante pour le déchargement desdits matériaux
- une cloison mobile (10) s'étendant transversalement à l'intérieur du récipient (1),
- une première liaison mécanique souple (14a) dont une extrémité avant est reliée à une extrémité gauche de la cloison (10) et qui s'étend d'abord horizontalement vers l'arrière du véhicule le long d'une face intérieure de la paroi latérale gauche (4a), puis vers le haut ou vers le bas via au moins une première poulie (15a),
- une deuxième liaison mécanique souple (14b) dont une extrémité avant est reliée à une extrémité droite de la cloison (10) et qui s'étend d'abord horizontalement vers l'arrière du véhicule le long d'une face intérieure de la paroi latérale droite (4b), puis vers le haut ou vers le bas via au moins une deuxième poulie (15b),
le véhicule comportant en outre un ensemble moteur (16) dont le stator est fixé au châssis du véhicule et dont le rotor est relié à une extrémité arrière de la première et de la deuxième liaison mécanique (14a, 14b) pour les tirer et pour entrainer ainsi la cloison mobile (10) en force vers l'arrière du récipient (1),
l'extrémité avant de la première liaison mécanique (14a) est reliée à l'extrémité gauche de la cloison (10), à une hauteur H1 comprise entre 10% et 90% d'une hauteur H2 de la cloison (10),
l'extrémité avant de la deuxième liaison mécanique (14b) est reliée à l'extrémité droite de la cloison (10) à la hauteur H1,
la paroi latérale gauche (4a) comporte une première partie longitudinale (24a) surplombant la première liaison mécanique (14a),
la paroi latérale droite (4b) comporte une deuxième partie longitudinale (24b) surplombant la deuxième liaison mécanique (14b),
**caractérisé en ce que** la première liaison mécanique souple (14a) et la deuxième liaison mécanique souple (14b) sont reliées entre elles pour former une liaison mécanique souple unique, et **en ce que** ladite liaison mécanique souple unique est reliée de manière libre à la cloison mobile (10).

2. Véhicule selon la revendication 1, **caractérisé en ce que** la liaison mécanique souple unique est reliée de manière libre à la cloison mobile (10) au moyen d'une quatrième poulie (61) et d'une cinquième poulie (62) montées respectivement à l'extrémité gauche et à l'extrémité droite de la cloison mobile (10).

3. Véhicule selon la revendication 2, **caractérisé en ce que** la quatrième poulie (61) et la cinquième poulie (62) sont montées à l'avant de la cloison mobile (10).

4. Véhicule selon l'une quelconque des revendications précédentes, **caractérisé en ce que** la hauteur H1 est comprise entre 30% et 70% de la hauteur H2.

5. Véhicule selon l'une quelconque des revendications précédentes, **caractérisé en ce que** la paroi latérale gauche (4a) comporte un premier repli formant la première partie longitudinale (24a) surplombant la première liaison mécanique (14a), et **en ce que** la paroi latérale droite (4b) comporte un deuxième repli formant la deuxième partie longitudinale (24b) surplombant la deuxième liaison mécanique (14b).

6. Véhicule selon l'une quelconque des revendications précédentes, **caractérisé en ce que** le récipient (1) comporte :
- une première pièce rapportée (25a) à la paroi latérale gauche (4a) et formant la première partie longitudinale (24a) surplombant la première liaison mécanique (14a), et
- une deuxième pièce rapportée (25b) à la paroi latérale droite (4b) et formant la deuxième partie longitudinale (24b) surplombant la deuxième liaison mécanique (14b).

7. Véhicule selon l'une quelconque des revendications précédentes, **caractérisé en ce que** la face intérieure de la paroi latérale gauche (4a) présente un dégagement d'au moins 2 cm en dessous de la première liaison mécanique (14a), et **en ce que** la face intérieure de la paroi latérale droite (4b) présente un dégagement d'au moins 2 cm en dessous de la deuxième liaison mécanique (14b).

8. Véhicule selon l'une quelconque des revendications précédentes, **caractérisé en ce que** le récipient (1) est un récipient autoportant dont les parois latérales gauche et droite (4a, 4b) comportent un assemblage de tôles présentant des pliures longitudinales.

9. Véhicule selon la revendication 8, **caractérisé en ce que** les tôles ont une épaisseur comprise entre 4 mm et 20 mm.

10. Véhicule selon l'une quelconque des revendications précédentes, **caractérisé en ce que** les première et deuxième liaisons mécaniques souples (14a, 14b) sont des câbles.

11. Véhicule selon l'une quelconque des revendications précédentes, **caractérisé en ce que** ni la première liaison mécanique (14a) ni la deuxième liaison mécanique (14b) ne passent entre la cloison mobile (10) et respectivement la paroi latérale gauche (4a) et la paroi latérale droite (4b) du récipient (1).

12. Véhicule selon l'une quelconque des revendications précédentes, **caractérisé en ce qu'**au moins une partie de la périphérie de la cloison mobile (10) comporte un joint d'étanchéité (22) s'étendant vers les faces intérieures du récipient (1).

13. Véhicule selon l'une quelconque des revendications précédentes, **caractérisé en ce que** le récipient (1) est un récipient ouvert dans sa partie supérieure, **en ce que** ledit récipient comporte des moyens de guidage de la cloison mobile (10), **en ce que** les moyens de guidage sont disposés au niveau d'une partie supérieure du récipient et à l'extérieur du récipient, et **en ce que** les moyens de guidage comportent deux paires des rails longitudinaux (28a, 29a) (29a, 29b), chaque paire de rails étant disposée respectivement sur les faces extérieures des parois latérales gauche (4a) et droite (4b) du récipient (1).

14. Véhicule selon l'une quelconque des revendications précédentes, **caractérisé en ce que** le récipient est relié de manière fixe au véhicule.

15. Véhicule selon l'une quelconque des revendications précédentes, **caractérisé en ce que** les axes de la première poulie (15a) et de la deuxième poulie (15b) sont inclinés par rapport à l'horizontale.

## Patentansprüche

1. Fahrzeug, umfassend einen Behälter (1) zu Beladen, den Transport und das Abladen von Materialien, wobei der genannte Behälter (1) sich in Längsrichtung gemäß einer Achse des Fahrzeugs von vorne nach hinten erstreckt und umfasst:
- eine linke Seitenwand (4a) und eine rechte Seitenwand (4b),
- eine hintere Wand (8), die sich zum Abladen der genannten Materialien öffnet
- eine mobile Trennwand (10), die sich querverlaufend im Innern des Behälters (1) erstreckt,
- eine erste biegsame mechanische Verbindung (14a), von der ein vorderes Ende mit einem linken Ende der Trennwand (10) verbunden ist und die sich zunächst horizontal zur Hinterseite des Fahrzeugs entlang einer Innenseite der linken Seitenwand (4a), dann nach oben oder nach unten über wenigstens eine erste Seilscheibe (15a) erstreckt,
- eine zweite biegsame mechanische Verbindung (14b), von der ein vorderes Ende mit einem rechten Ende der Trennwand (10) verbunden ist und sich zunächst horizontal zur Rückseite des Fahrzeugs entlang einer Innenseite der rechten Seitenwand (4b), dann nach oben oder nach unten über wenigstens eine zweite Seilscheibe (15b) erstreckt,
wobei das Fahrzeug darüber hinaus eine Motorgruppe (16) umfasst, deren Stator am Fahrgestell des Fahrzeugs befestigt ist und dessen Rotor mit einem hinteren Ende der ersten und der zweiten mechanischen Verbindung (14a, 14b) verbunden ist, um sie zu ziehen und um somit die mobile Trennwand (10) unter Krafteinwirkung zur Rückseite des Behälters (1) anzutreiben,
das vordere Ende der ersten mechanischen Verbindung (14a) ist mit dem linken Ende der Trennwand (10) in einer Höhe H1 verbunden, die zwischen 10 % und 90 % einer Höhe H2 der Trennwand (10) inbegriffen ist,
das vordere Ende der zweiten mechanischen Verbindung (14b) ist mit dem rechten Ende der Trennwand (10) auf der Höhe H1 verbunden,
die linke Seitenwand (4a) einen ersten länglichen Teil (24a) umfasst, der die erste mechanische Verbindung (14a) überragt,
die rechte Seitenwand (4b) einen zweiten länglichen Teil (24b) umfasst, der die zweite mechanische Verbindung (14b) überragt, **dadurch gekennzeichnet, dass** die erste biegsame mechanische Verbindung (14a) und die zweite biegsame mechanische Verbindung (14b) miteinander verbunden sind, um eine einzige biegsame mechanische Verbindung zu bilden und dass die genannte einzige biegsame mechanische Verbindung frei mit der mobilen Trennwand (10) verbunden ist.

2. Fahrzeug gemäß Anspruch 1, **dadurch gekennzeichnet, dass** die einzige biegsame mechanische Verbindung frei mit der mobilen Trennwand (10) mittels einer vierten Seilscheibe (61) und einer fünften Seilscheibe (62) verbunden ist, die jeweils am linken Ende und am rechten Ende der mobilen Trennwand (10) montiert sind.

3. Fahrzeug gemäß Anspruch 2, **dadurch gekennzeichnet, dass** die vierte Seilscheibe (61) und die fünfte Seilscheibe (62) an der Vorderseite der mobilen Trennwand (10) montiert sind.

4. Fahrzeug gemäß irgendeinem der voranstehenden Ansprüche, **dadurch gekennzeichnet, dass** die Höhe H1 zwischen 30 % und 70 % der Höhe H2 inbegriffen ist.

5. Fahrzeug gemäß irgendeinem der voranstehenden Ansprüche, **dadurch gekennzeichnet, dass** die linke Seitenwand (4a) eine erste Falte umfasst, die den ersten länglichen Teil (24a) bildet, der die erste mechanische Verbindung (14a) überragt, und dass die rechte Seitenwand (4b) eine zweite Falte umfasst, die den zweiten länglichen Teil (24b) bildet, der die zweite mechanische Verbindung (14b) überragt.

6. Fahrzeug gemäß irgendeinem der voranstehenden Ansprüche, **dadurch gekennzeichnet, dass** der Behälter (1) umfasst:
- ein erstes versetztes Stück (25a) an der linken Seitenwand (4a), das den ersten länglichen Teil (24a) bildet, der die erste mechanische Verbindung (14a) überragt, und
- ein zweites versetztes Stück (25b) an der rechten Seitenwand (4b), das den zweiten länglichen Teil (24b) bildet, der die zweite mechanische Verbindung (14b) überragt.

7. Fahrzeug gemäß irgendeinem der voranstehenden Ansprüche, **dadurch gekennzeichnet, dass** die Innenseite der linken Seitenwand (4a) eine Aussparung von wenigstens 2 cm unterhalb der ersten mechanischen Verbindung (14a) aufweist und dass die Innenseite der rechten Seitenwand (4b) eine Aussparung von wenigstens 2 cm unterhalb der zweiten mechanischen Verbindung (14b) aufweist.

8. Fahrzeug gemäß irgendeinem der voranstehenden Ansprüche, **dadurch gekennzeichnet, dass** der Behälter (1) ein selbsttragender Behälter ist, dessen linke und rechte Seitenwand (4a, 4b) einen Zusammenbau aus Blechen umfassen, die längliche Falzungen aufweisen.

9. Fahrzeug gemäß Anspruch 8, **dadurch gekennzeichnet, dass** die Bleche eine zwischen 4 mm und 20 mm inbegriffene Dicke aufweisen.

10. Fahrzeug gemäß irgendeinem der voranstehenden Ansprüche, **dadurch gekennzeichnet, dass** die erste und die zweite biegsame mechanische Verbindung (14a, 14b) Kabel sind.

11. Fahrzeug gemäß irgendeinem der voranstehenden Ansprüche, **dadurch gekennzeichnet, dass** weder die erste mechanische Verbindung (14a) noch die zweite mechanische Verbindung (14b) zwischen der mobilen Trennwand (10) und jeweils der linken Seitenwand (4a) und der rechten Seitenwand (4b) des Behälters (1) hindurchtreten.

12. Fahrzeug gemäß irgendeinem der voranstehenden Ansprüche, **dadurch gekennzeichnet, dass** wenigstens ein Teil des Umfangs der mobilen Trennwand (10) eine Dichtungsfuge (22) umfasst, die sich zu den Innenseiten des Behälters (1) erstrecken.

13. Fahrzeug gemäß irgendeinem der voranstehenden Ansprüche, **dadurch gekennzeichnet, dass** der Behälter (1) ein in seinem oberen Teil offener Behälter ist, dass der genannte Behälter Führungsmittel der mobilen Trennwand (10) umfasst und dass die Führungsmittel an einem oberen Teil des Behälters und an der Außenseite des Behälters angeordnet sind und dass die Führungsmittel zwei Paare der Längsschienen (28a, 29a) (29a, 29b) umfassen, wobei jedes Paar Schienen jeweils auf den Außenseiten der linken (4a) und der rechten (4b) Seitenwände des Behälters (1) angeordnet ist.

14. Fahrzeug gemäß irgendeinem der voranstehenden Ansprüche, **dadurch gekennzeichnet, dass** der Behälter fest mit dem Fahrzeug verbunden ist.

15. Fahrzeug gemäß irgendeinem der voranstehenden Ansprüche, **dadurch gekennzeichnet, dass** die Achsen der ersten Seilscheibe (15a) und der zweiten Seilscheibe (15b) in Bezug auf die Horizontale geneigt sind.

## Claims

1. A vehicle comprising a container (1) for loading, transporting and unloading materials, said container (1) extending longitudinally along a front-rear axis of the vehicle and comprising:
- a left lateral wall (4a) and a right lateral wall (4b),
- an opening rear wall (8) for unloading said materials
- a movable partition (10) extending transversely inside the container (1),
- a first flexible mechanical connection (14a) one front end of which is connected to a left end of the partition (10) and which extends first horizontally towards the rear of the vehicle along an inner face of the left lateral wall (4a) and then upwards or downwards via at least one first pulley (15a),
- a second flexible mechanical connection (14b) one front end of which is connected to a right end of the partition (10) and which extends first horizontally towards the rear of the vehicle along an inner face of the right lateral wall (4b) and then upwards or downwards via at least one second pulley (15b),
the vehicle further comprising a motor assembly (16), the stator of which is fixed to the chassis of the vehicle and the rotor of which is connected to a rear end of the first and of the second mechanical connections (14a, 14b) to pull them and to thereby force the movable partition (10) towards the rear of the container (1),
the front end of the first mechanical connection (14a) is connected to the left end of the partition (10), at a height H1 comprised between 10% and 90% of a height H2 of the partition (10),
the front end of the second mechanical connection (14b) is connected to the right end of the partition (10) at the height H1,
the left lateral wall (4a) comprises a first longitudinal part (24a) overhanging the first mechanical connection (14a),
the right lateral wall (4b) comprises a second longitudinal part (24b) overhanging the second mechanical connection (14b),
**characterized in that** the first flexible mechanical connection (14a) and the second flexible mechanical connection (14b) are connected together to form a single flexible mechanical connection, and **in that** said single flexible mechanical connection is freely connected to the movable partition (10).

2. The vehicle according to claim 1, **characterized in that** the single flexible mechanical connection is freely connected to the movable partition (10) by means of a fourth pulley (61) and of a fifth pulley (62) mounted respectively at the left end and at the right end of the movable partition (10).

3. The vehicle according to claim 2, **characterized in that** the fourth pulley (61) and the fifth pulley (62) are mounted at the front of the movable partition (10).

4. The vehicle according to any one of the preceding claims, **characterized in that** the height H1 is comprised between 30% and 70% of the height H2.

5. The vehicle according to any one of the preceding claims, **characterized in that** the left lateral wall (4a) comprises a first fold forming the first longitudinal part (24a) overhanging the first mechanical connection (14a), and **in that** the right lateral wall (4b) comprises a second fold forming the second longitudinal part (24b) overhanging the second mechanical connection (14b).

6. The vehicle according to any one of the preceding claims, **characterized in that** the container (1) comprises:
- a first insert (25a) at the left lateral wall (4a) and forming the first longitudinal part (24a) overhanging the first mechanical connection (14a), and
- a second insert (25b) at the right lateral wall (4b) and forming the second longitudinal part (24b) overhanging the second mechanical connection (14b).

7. The vehicle according to any one of the preceding claims, **characterized in that** the inner face of the left lateral wall (4a) has a clearance of at least 2 cm below the first mechanical connection (14a), and **in that** that the inner face of the right lateral wall (4b) has a clearance of at least 2 cm below the second mechanical connection (14b).

8. The vehicle according to any one of the preceding claims, **characterized in that** the container (1) is a self-supporting container the left and right lateral walls (4a, 4b) of which comprise an assembly of metal sheets having longitudinal fold lines.

9. The vehicle according to claim 8, **characterized in that** the metal sheets have a thickness comprised between 4 mm and 20 mm.

10. The vehicle according to any one of the preceding claims, **characterized in that** the first and second flexible mechanical connections (14a, 14b) are cables.

11. The vehicle according to any one of the preceding claims, **characterized in that** neither the first mechanical connection (14a) nor the second mechanical connection (14b) pass between the movable partition (10) and respectively the left lateral wall (4a) and the right lateral wall (4b) of the container (1).

12. The vehicle according to any one of the preceding claims, **characterized in that** at least one part of the periphery of the movable partition (10) comprises a seal (22) extending towards the inner faces of the container (1).

13. The vehicle according to any one of the preceding claims, **characterized in that** the container (1) is an open container in the upper part thereof, **in that** said container comprises means for guiding the movable partition (10), **in that** the guide means are disposed at an upper part of the container and outside the container, and **in that** the guide means comprise two pairs of longitudinal rails (28a, 29a) (29a, 29b), each pair of rails being disposed respectively on the outer faces of the left (4a) and right (4b) lateral walls of the container (1).

14. The vehicle according to any one of the preceding claims, **characterized in that** the container is fixedly connected to the vehicle.

15. The vehicle according to any one of the preceding claims, **characterized in that** the axes of the first pulley (15a) and of the second pulley (15b) are inclined relative to the horizontal.
